# EUROPEAN PATENT SPECIFICATION

(11) **EP 4 272 929 B1**
(45) Date of publication and mention of the grant of the patent: **02.07.2025**
(21) Application number: 22171120.3
(22) Date of filing: 02.05.2022
(51) Int. Cl.: B29C 53/56, B29C 53/40, B31C 5/00, B29D 99/00

(54) **DEVICE FOR ROLLING A FIBER MAT AND METHOD FOR ROLLING A FIBER MAT**
VORRICHTUNG ZUM ROLLEN EINER FASERMATTE UND VERFAHREN ZUM ROLLEN EINER FASERMATTE
DISPOSITIF DE ROULEMENT D'UN TAPIS DE FIBRES ET PROCÉDÉ DE ROULEMENT D'UN TAPIS DE FIBRES

(43) Date of publication of application: 08.11.2023
(73) Proprietor: Nordex Blade Technology Centre ApS, 5771 Stenstrup (DK)
(72) Inventor: SØRENSEN, Flemming, 5771 Stenstrup (DK)
(74) Representative: Epping - Hermann - Fischer

(56) References cited:
- WO-A1-2017/215735
- US-A- 3 357 222

## Description

The invention concerns a device for rolling a fiber mat for a wind turbine rotor blade and a method for rolling a fiber mat to a coil.

Wind turbines with wind turbine rotor blades are widely known from the state of the art and are used to convert wind energy into electrical energy. Wind turbines comprise a multitude of components which are connected to each other, for example by means of a flange connection. For example, in the area of a rotor blade root, the rotor blades comprise a rotor blade connection via which the rotor blades are connected to a bearing ring of a so-called pitch bearing or to a component connected to the bearing ring, such as a so-called extender for a wind turbine rotor blade. Further, such connections are also used for connecting rotor blade segments which, arranged and joined together lengthwise, form an entire rotor blade. Such a rotor blade is called a split or segmented rotor blade.

For example, for a connection, a rotor blade or rotor blade segment comprises a number of connecting means integrated into the laminates. The connecting means can, for example, be designed as transverse bolts or bushings, both having inner threads, and be part of a flange insert for the rotor blade connection. For example, rotor blade segments can be connected to each other by means of bolts either directly or via suitable intermediate pieces.

Wind turbine rotor blades are generally made of glass or carbon fiber laminates infused by curable resin, so called fiber reinforced plastics, which themselves are not well suited for the above-mentioned connections. A known approach in the prior art (e.g. WO 2004/110862, WO 2012/140039 and EP 2952735) is to embed inserts in the form of metal bushings at an end face of the wind turbine rotor blade root area. These bushings extend perpendicular to the end face and longitudinally in the general direction of the rotor blade. The bushings typically comprise a cylindrical part with an at least partially threaded axial bore in an end face perpendicular to the longitudinal axis of the cylindrical part. The other end of the bushing typically comprises a part with a taper.

Typically, quite a lot of space is provided between the connecting means, e.g. inserts. WO 2017/215735 A1 suggests elongate spacers adapted to be placed in gaps between inserts of a connection of a wind turbine blade part. These spacers are made of a fiber mat of a predetermined shape and rolled into a coil shape. The spacers are later on impregnated with curable resin, e.g. together with other/further layers in the connection region, e.g. surrounding inserts and the like. Such spacers are usually manually manufactured by persons. These spacers are simple wound coils, and not pre-cured and they may, unlike rigid spacers (e.g. manufactured by pultrusion or other pre-cured fiber reinforced composites), be able to adapt their shape when they are inserted into the gaps between the wrapped inserts. For example, this will ensure good contact between the fibers in the mats wrapped around the inserts and the fibers in the mats of the spacer, thus ensuring the desired high fiber volume fraction in the resin matrix between the inserts. This is because the spacer is deformable and thus may be pressed into and filling the gap between two wrapped inserts entirely. The risk that areas with a low concentration of fibers may occur is thus reduced.

Another prior art technology is disclosed in US3357222.

One task underlying the present invention is to provide an improved concept for manufacturing a fiber mat of a predetermined, coiled shape, e.g. a spacer meant to be placed in the gap between the inserts of such a connection structure.

The object is solved by the independent claims and the respective sub-claims.

According to the invention a device for rolling a fiber mat for a wind turbine rotor blade is disclosed. The device comprises a working surface. The device comprises a shaft being slidably and rotatably supported. The shaft is slidable in a sliding direction between a start position and an end position along the working surface. The shaft is rotatable in the opposite direction to the sliding direction, wherein with respect to the working surface the shaft rotates as if the shaft were rolling backwards against the sliding direction. The device further comprises a film covering the working surface and being fixedly connected to the shaft with a first end, such that upon rotation of the shaft the film is wound up on the shaft.

The device allows a user to easily roll or wind-up a fiber layer, a fiber mat or generally a fabric layer/mat. In particular a fiber mat can be rolled up to a spacer that is placed in between the above-mentioned (steel) inserts. The spacer can be used instead of pultruded spacers as described above. The device provides several advantages, for example:
- The device allows for replacing a fully manual process (e.g. ensuring consistent quality of the coils) and solves as well a potential HSE issue in relation to repeated manual work.
- The device contributes to a CoE effect in blade productions where the root joints or joints of rotor blade segments are manufactured.
- The device contributes to safe man hours by replacing the manual solution.

In a general way according to the invention, rolling up the fiber mat with the inventive device works the following way.
- Initially, the shaft is positioned in the start position.
- The film, which is fixed to the shaft with the first end, covers the working surface, e.g. it extends along the working surface away from the shaft.
- Onto the film, the fiber mat is placed, i.e. it is laid down onto the film.
- Further, the fiber mat is slightly slid under the shaft, i.e. between the film and shaft. In particular, the fiber mat is slid against the film, i.e. it abuts against the film at the first end. For example, the fiber mat is clamped between the shaft and film and thus the working surface.
- Now, the shaft is slid straight forward (in particular manually by a user) along the sliding direction towards the end position, thereby the shaft is rotated in the opposite direction. By this combination of movements, at the one hand the sliding movement and at the other hand the rotation of the shaft, the fiber mat is rolled up. In particular, the rotation of the shaft causes the film being wound up onto the shaft, since the film is fixedly connected to the shaft. Since the fiber mat is slid between the shaft and the film (against the film's end), the film forms a pocket behind the shaft with respect to the sliding direction towards the end position. In this pocket, the fiber mat is rolled up, but cannot be rolled onto shaft due to the rotation of the shaft in the opposite direction.

After having rolled up the fiber mat, the fiber mat in its rolled-up state can be taken or is released into a corresponding pocket or collector.

In other words, the device is configured and designed such that, after having placed a fiber mat onto the film, wherein the fiber mat is slightly slid under the shaft between the shaft and the film, by sliding the shaft towards the start position and rotating the shaft in the opposite direction the fiber mat is rolled up.

The device is a stable device, e.g. to be placed at a floor. For example, the device is table-like. For example, the device comprises one or more legs to stand on the floor. Optionally or alternatively, the device is designed to be placed onto a table or other stand device. The device comprises supporting means for supporting and guiding the shaft. The device is mainly made of metal, apart from the film (see below). The device further comprises the working surface being, for example, a flat and even surface. E.g. the working surface is a table-like platform.

The film, for example, is a foil. In an embodiment, the film has a smooth surface. At least, the film has a surface which allows the fiber mat and the film to slide off each other, e.g. between the fiber mat and the film is no or only little friction. In an embodiment, the film is made of plastic. The film, for example, is a very thin plastic film, e.g. having a thickness of less than 0,5 mm.

The film spans an area between the first end and a second end of the film facing away from the shaft. For example, at the first end the film is fixed to the shaft lengthwise, i.e. along a longitudinal axis of the shaft. For example, the film defines a support area for placing the fiber mat onto.

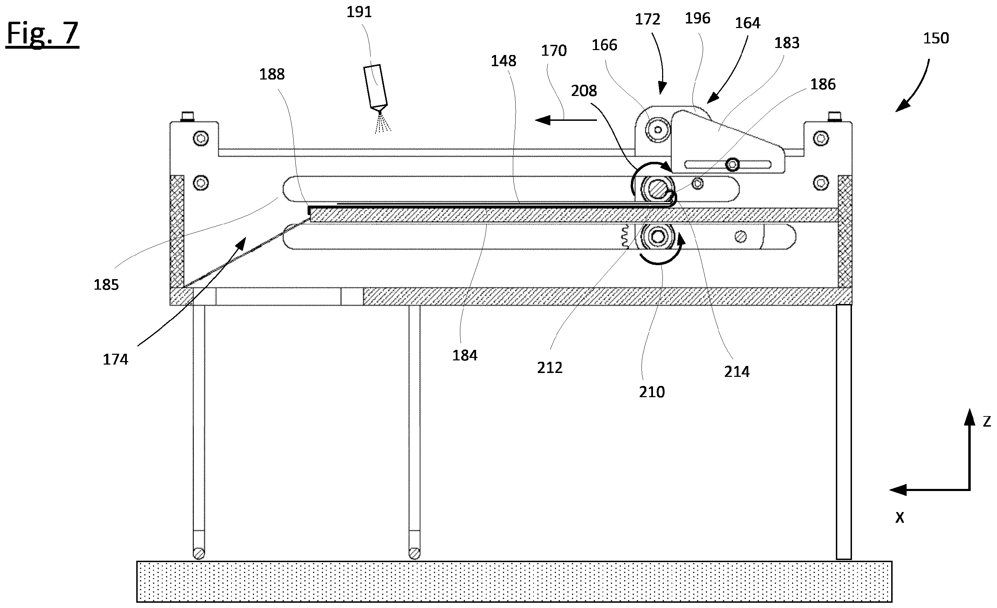

The rotation of the shaft is about the shaft's longitudinal axis (axis of rotational symmetry or central longitudinal axis). The rotation in the opposite direction to the sliding direction means that the shaft counter-rotates with respect to the sliding direction. In other words, if you imaginary look at the shaft from above and the shaft is moved forward in sliding direction towards the end position, then the shaft rotates rearwards. In other words again, with respect to the working surface the shaft rotates as if the shaft were rolling backwards against the displacement movement. In yet other words, the shaft rolls to the one side while it is moved to the other opposing side. At this point, we also refer to the figures, e.g. figure 7, showing this movement of the shaft.

According to at least one embodiment the device comprises a transfer mechanism, wherein the shaft is coupled to the transfer mechanism such that by sliding the shaft in the sliding direction the shaft is forced to rotate. In other words, a movement of the shaft forces a rotation of the shaft. The transfer mechanism transfers a movement of the shaft into a rotation of the shaft. According to one embodiment, the transfer mechanism is a kinematic system or device. In order to cause the rotation of the shaft, the transfer mechanism is supported at least partially stationary with respect to the working surface.

According to at least one embodiment the transfer mechanism is a gear mechanism, the gear mechanism comprising fixed gear means being stationary with respect to the working surface, wherein a first gear is rotatably fixed on the shaft, the first gear being in meshing engagement with a second gear, wherein the axes of rotation of the first and second gears are fixed with respect to each other, and wherein the second gear is in meshing engagement with the fixed gear means. The first gear and second gear move with the shaft in the sliding direction. Since the second gear is in engagement with the fixed gear means, by sliding the shaft the second gear is rotated. This rational movement is transferred to the first gear, which thus rotates the shaft, since the shaft and the first gear is a fixed unit. In other words, the first gear and the shaft are fixed relative to each other and form a rigid unit.

The fixed gear means are for example one or more gears being fixed with respect to the working surface. Alternatively, the fixed gear means is a toothed rack. In other words, the second gear and the fixed gear means are formed as a rack and pinion.

At this point, we note that the described transfer mechanism and its embodiments may be arranged at one side of the shaft. Optionally, it can be arranged on both sides of the shaft.

According to at least one embodiment the device comprises a sledge unit, the sledge unit being slidable in the sliding direction. The sledge unit is slidably supported on the device and is moved in the sliding direction, e.g. between the start position and the end position. E.g. the sledge unit is slidably supported on the device via one or more sledge bars. The sledge bars are, for example, fixed stationary to a support (structure) or frame (structure) of the device.

According to at least one embodiment the shaft is coupled to the sledge unit. In particular, the shaft is supported (rotatably) on the sledge unit.

According to at least one embodiment the first and the second gear are coupled to the sledge unit. Thus, the first and second gears are rotatably supported on the sledge unit. By moving the sledge unit, the first and second gears are moved accordingly.

According to at least one embodiment the sledge unit comprises a handling element in order to move the shaft between the start position and the end position. Thus, an easy way is given for moving the sledge unit and thus the shaft. In particular, the sledge unit is moved manually.

It is noted that the handling element, the sledge unit and/or the shaft can also be directly driven by a motor unit, e.g. an electronic drive.

According to at least one embodiment a second end of the film, the second end being opposite to the first end, is fixedly connected to an end of the working surface. Thus, the film is fixed to the device at both ends. Thus, a well-defined area is span for laying the fiber mat onto it. For example, the second end is fixed to the device at an end of the working surface, facing away from the shaft in the start position. This contributes to span an even area with the film covering the working surface. The fixation of the film at the second end is stationary, i.e. it is fixed with respect to the working surface. As an example, the film can be fixed via fastening means, e.g. screws, nails or a rivet. Preferably, as another example, the film is adhesively bonded to the device, e.g. via a double-sided adhesive tape.

According to at least one embodiment the device comprises one or more abutment elements in order to limit the movement of the shaft between the start position and the end position. The abutment elements serve as defined stops for the sliding movement of the shaft respectively the above-mentioned sledge unit. A safely and precise movement is guaranteed between the start position and the end position. This also contributes to very easy handling, since a user just needs to move the shaft against the abutment elements in order to be sure that a complete movement and thus a complete rolling of the fiber mat has been performed.

According to at least one embodiment the device comprises a guide element on both sides of the working surface, in order to slidably support the shaft and/or the sledge unit. For example, the device, e.g. a stand or support, comprises one or more guiding rails or bars, e.g. a tab protruding horizontally, on which the shaft is slidably supported. The one or more guiding elements are arranged on one side of the shaft or on both sides, e.g. at axial ends of the shaft. For example, the guiding elements are breakthroughs or slits, through which the shaft is passed through, the breakthroughs or slits extending along the working surface in the sliding direction and defining the sliding movement of the shaft.

Additionally or alternatively the handling element can be slidably supported, e.g. analogously as above.

According to at least one embodiment the device comprises a collector bucket, which is arranged adjacently to the working surface in the area of the end position. The collector bucket being configured to collect a rolled-up fiber mat when the shaft is slid to the end position. The collector bucket is arranged adjacent to or near to the second end of the film. In particular, if the shaft reaches the end position (or close to reaching it), the rolled-up fiber mat is pushed into the collector bucket, e.g. falls into it. For example, an inclined surface joins or follows the surface, which in particular slopes downwards (i.e. along the direction of gravity). Thus, a finished fiber-mat simply can fall into the bucket when the shaft is reaching or has reached the end position.

According to another aspect a method is disclosed for rolling up a fiber mat to a coil with a device according to any of the preceding claims, the method comprising the following steps:
- providing the shaft in the start position,
- laying the fiber mat onto the film along the working surface,
- pushing a front end of the fiber mat, the front end facing the shaft, under the shaft against the film,
- sliding the shaft in the sliding direction into the end position causing the shaft to rotate such that the fiber mat is being rolled up.

The method essentially enables the above-mentioned advantages and functions. The above-described features and embodiments according to the first aspect similarly apply to the method.

According to at least one embodiment - in the step of pushing - the front end of the fiber mat is pushed under the shaft and behind the shaft against the film such that the film forms a pocket behind the shaft. In other words, the film forms a loop. In this loop, the fiber mat is rolled and kept during the movement and rotation of the shaft.

According to at least one embodiment - after the step of laying - glue is provided at least partially onto the surface of the fiber mat. This helps to keep the fiber mat in the rolled-up state. In other words, when rolled-up layers of the fiber mat are stuck together. For example, a lower half of or a third of the fiber mat is provided with the glue. Glue is also named adhesive. The glue can be manually or automatically be provided onto the mat, e.g. by spraying.

According to at least one embodiment - prior to the step of pushing - the fiber mat is folded at the front end to form a folded section, and wherein the fiber mat is pushed with the folded section at least partially under the shaft. This contributes to rolling-up the fiber mat, in particular the start of the rolling is improved. In other words, this helps that the rolling-up of the fiber mat in the pocket reliably starts, when the shaft is initially moved out of the start position and rotated.

According to at least one embodiment the fiber mat is folded such that the folded section is facing away from the working surface.

Further advantages, features and functions are given in the following exemplary embodiment of the invention, which are explained in connection with the figures. Identical, similar or similarly acting elements are provided with the same reference signs in the figures.

In the figures:
Figure 1 shows a schematic view of a wind turbine,
Figure 2 shows a schematic view of a split rotor blade with two rotor blade segments,
Figure 3 shows a schematic section view of a segment of a connection end of the rotor blade segment,
Figure 4 shows an exemplary spacer made of a fiber mat,
Figure 5 shows a schematic perspective view of a device for rolling up a fiber mat according to an embodiment of the invention,
Figures 6 to 11 show several side views and sectional views of the device according to figure 5, and
Figure 12 shows a flow chart of a method for rolling up a fiber mat to coil according to an embodiment of the invention.

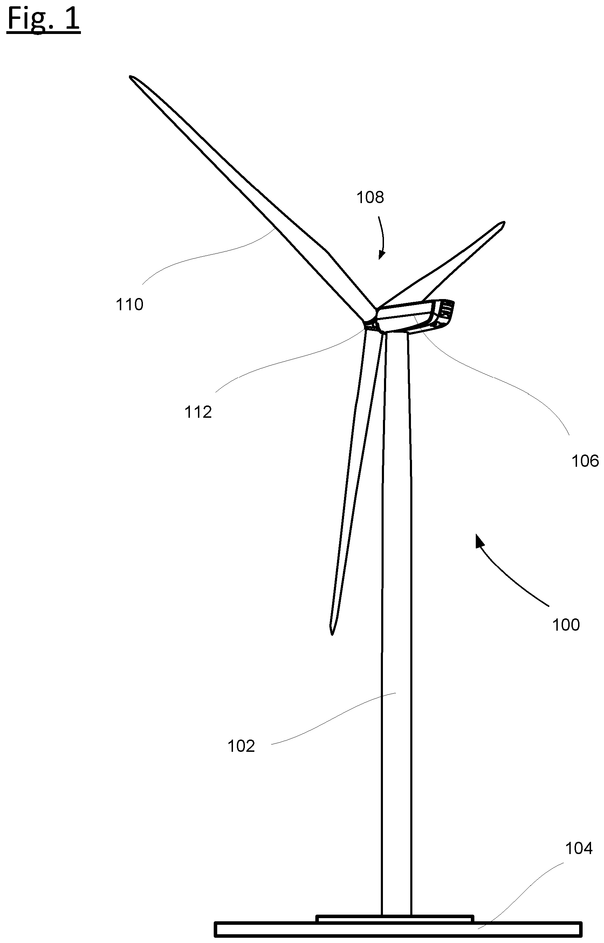

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the kinetic energy of the rotor 108 into electrical energy.

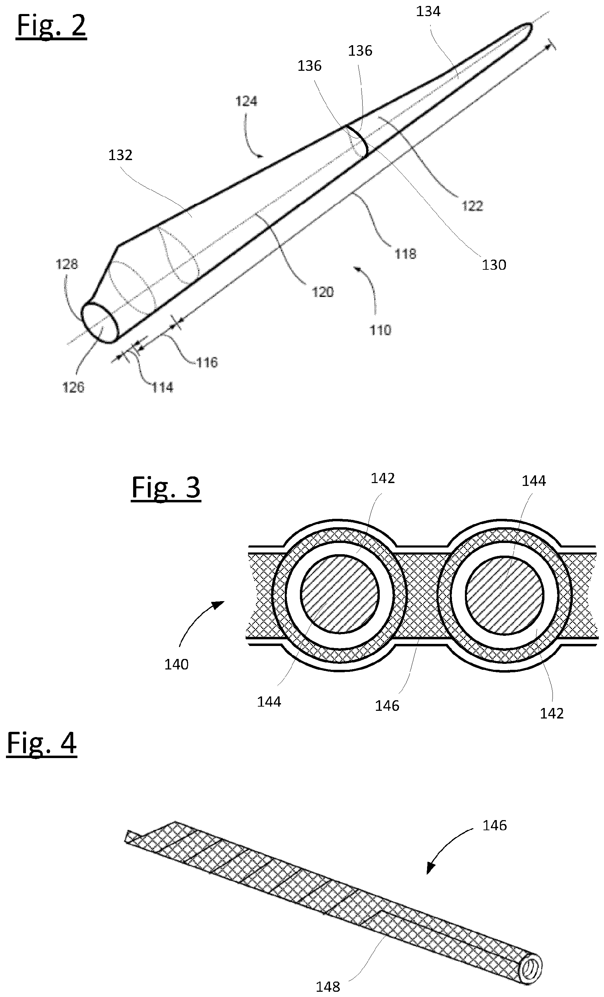

Figure 2 shows an exemplary wind turbine rotor blade 110. The rotor blade 110 has the shape of a conventional rotor blade and has a rotor blade root area 114 facing the rotor hub 112. The rotor blade root area 114 typically has an essentially circular cross-section. The rotor blade root area 114 is followed by a transition area 116 and a profile area 118 of rotor blade 110. The rotor blade 110 has a pressure side 122 and an opposite suction side 124 with respect to a longitudinal extension direction 120 (also main extension direction). The rotor blade 110 is essentially hollow inside.

In the rotor blade root area 114 a rotor blade connection end 126 with a flange connection 128 is provided, by means of which the rotor blade 110 is mechanically connected to a pitch bearing or an extender.

The rotor blade 110 exemplarily also comprises a division area 130 where a blade root-side rotor blade segment 132 and a blade tip-side rotor blade segment 134 are connected to each other. For this purpose, both segments 132, 134 each comprise a segment connection ends 136, 138 (also connection regions). The rotor blade 110 is thus a split rotor blade as described above. Embedded into each connection end 136, 138 is a multitude of inserts (e.g. sleeves or bushings), which are arranged according to the profile (in circumferential direction) and, for example, comprise internal threads for the reception of screw bolts, also called bearing bolts or connecting bolts. A connection end 136, 138 is realized for example as a flange insert, which is inserted as a prefabricated insert into a production mould for the manufacture of the rotor blade 110. However, it is also conceivable that no flange insert is provided and the bushings are embedded and laminated directly into the rotor blade half shells. The inserts are made of steel, for example. Similarly, inserts may also be provided at the rotor blade root end 126 for connection to the pitch bearing or the extender as described above.

Figure 3 shows a schematic, partial section view of a segment 140 of the connection end 136 (this similarly applies for connection ends 126, 138). The segment 140 has a multitude of inserts 142 with boreholes 144, typically being embedded into one or more layers of fiber mats laminated together in synthetic resin (details omitted for sake of clarity). For example, to fill a gap arising from a predetermined distance between the inserts 142, spacers 146 are provided between two adjacent inserts 142.

An exemplary spacer 146 is shown in figure 4. Such spacer 146 is typically made of a fiber mat 148 being rolled-up or wound-up, in particular it is simply rolled up to a coil.

Prior to curing the laminate, such spacers 146 are placed between each two inserts 142 and are, as can be seen from figure 3, readily deformable in order not to leave a gap between the inserts 142 in which a low concentration of fiber and an excessive concentration of matrix resin would be present, in particular after having provided resin to the laminate and cured the segment 140.

The fiber mat 148 for the spacer 142 according to figure 4 typically has a trapezoidal cut, such that after rolling the mat 148, the rolled-up spacer 146 has a different thickness along the longitudinal length of the spacer 146. However, different shapes can be used for the fiber mats 148, e.g. as shown in WO 2017/215735 A1. The fiber mats 148 may be prepregs but are preferably dry mats to be infused in situ in a mould when the segment 140 is manufactured either as a prefab or directly during manufacturing of a rotor blade half shell as described above.

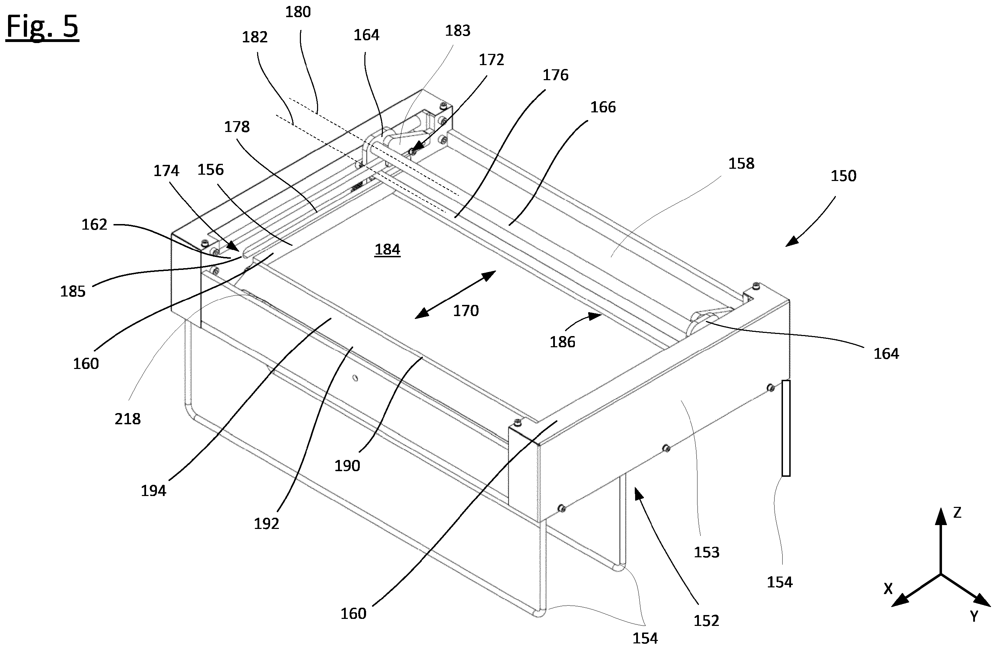

In the following, a device 150 for rolling a fiber mat 148 to a coil, e.g. to be used as a spacer 146, according to an embodiment of the invention is described by the help of figures 5 to 12.

With regard to figure 5, the device 150 is a stable device to be placed onto a floor (151) or table. The device 150 comprises a rigid support structure 152, which is optionally covered by a fairing 153. The support structure 152 can also be seen as a ground structure, base structure or support frame. The support structure 152 comprises a stand 154 for support on the floor or table. The stand 154, for example, comprises two legs, e.g. U-shaped, as shown in figure 5.

The device 150 comprises a fixed, i.e. stationary, working surface 156, being fixedly coupled with the support structure 152 (at least indirectly). The working surface 156 is provided by a (flat) plate 158.

At both lateral sides 160 of the working surface 156 the device 150 comprises to vertically (in Z-direction according to the coordinate system of figure 5) extending side walls 162 (only one side wall 162 is visible in figure 5), in particular limiting the working surface 156 at the lateral sides 160. The side walls 162 are part of the support structure 152 or at least indirectly fixed to it.

The device 150 comprises a sledge unit 164, which comprises a handling element 166. The handling element 166 is formed as a handling shaft and extends over the working surface 156, e.g. in Y-direction according to the shown coordinate system. The sledge unit 164 is slidably supported on the device 150 at both lateral sides 160 of the working surface 156. In the embodiment according to the figure 5, the sledge unit 164 is slidably supported on a sledge bar 168 arranged along each side wall 168 (only one visible), each sledge bar 168 extending horizontally (X-direction according to the shown coordinate system). In the shown embodiment, the sledge bars 168 are arranged outside of the side walls 162 and the handling element 166 extends over the side walls 162 and over the working surface 156. Optionally, the handling element 166 can be slidably supported on the side walls 162. The sledge bars 168 are part of the device 150, i.e. stationary fixed or arragned.

The sledge unit 164 can be slid in a sliding direction 170 forth and back, in particular between a start position 172 and an end position 174. The sledge unit 164 can be slid manually via the handling element 166.

The sledge unit 164 comprises a shaft 176, which is coupled to the sledge unit 164 and extends in parallel to the handling element 166. In particular, each side wall 162 comprises a guide element 178 in the form of a slot (only one visible), through which the shaft 176 passes and extends slightly over the working surface 156. The shaft 176 is rotatably supported on the sledge unit 164. The shaft 166 and the handling element 166 are fixedly coupled to the sledge unit 164 with respect to their longitudinal axes 180 and 182. The longitudinal axis 182 of the shaft 176 is its rotation axis. Thus, sliding the sledge unit 164 in the sliding direction 170 is therefore equivalent to moving the shaft 176 between the start position 172 and the end position 174. In figure 5, the sledge unit 164 and thus the shaft 176 are in the start position 172, e.g. the initial position for rolling up a fiber mat, as will be described below.

In order to provide for a defined sliding movement, the device 150 has abutment elements 183 (at the start position 172) and 185 (at the end position 174) at both lateral sides 160, which limit the sliding of the sledge unit 164 and/or the shaft 176 respectively. In the shown embodiment, the first abutment elements 183 are vertically protruding elements mounted to the side walls 162, which abut against the handling element 166. At the end position 174, the second abutment elements 185 are formed by the end of slots 178 to abut against the shaft 176.

The device 150 further comprises a film 184, which covers the working surface 156. In particular, the film 184 lays on the working surface 156, thereby defining a support surface for the fiber mat to be rolled. The film 184 comprises a rectangular shape and is made of plastic. The film 184 comprises a first end 186 and an opposite second end 188. With the first end 186, the film 184 is fixedly connected to the shaft 176. For example, the first end 186 is adhesively bonded to the shaft 176 along the longitudinal axis 182. With the second end 188, the film 184 is fixedly connected (directly or indirectly) to an end 190 of the working surface 156, e.g. adhesively bonded to the plate 158. For example, a double side adhesive tape is used.

In the region of the end position 174, the device 150 comprises a collector bucket 192 for receiving manufactured, rolled-up fiber mats, i.e. fiber coils as shown exemplarily in figure 4. In the shown embodiment according to figure 5, the collector bucket 192 comprises an inclined surface 194 adjacently arranged to the end 190 of the working surface. The inclined surface 194 could be part of a separate plate/wall or part of the plate 158 of the working surface 156. The inclined surface 194 runs downwardly at a suitable angle, such that finished fiber coils can fall down to be gathered.

As explained in the introductory part of this disclosure, the device 150 allows for an easy rolling up of a fiber mat, in particular in a reproducible quality. For this purpose, a fiber mat is be placed onto the film 184 and slightly pushed with an end under the shaft 176 against the film 184 in the region of the first end 186. Then, via the handling element 166 the sledge unit 164 and thus the shaft 176 is slid in the sliding direction 170 from the start position 172 towards the end position 174. During this sliding movement, the shaft 176 is forced to rotate in a direction opposite to the sliding direction 179. The film 184 is rolled on the shaft 176 thereby forming a small pocket below the shaft, in which the fiber mat is caused to be rolled up to a coil, if the end position is reached. In the end position, the coil is released automatically into the collector bucket 192.

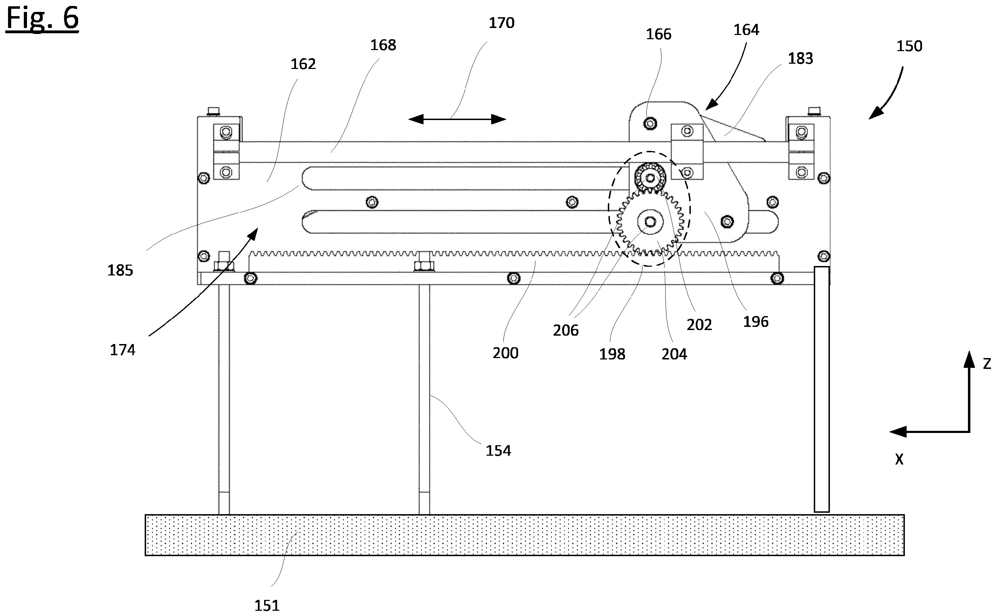

Figure 6 shows a side view of the device 150 outside of a side wall 162, wherein the sledge unit 164 is in the start position 172. Figure 7 shows a corresponding schematic sectional view in the start position 172. As can be seen, the sledge unit 164 comprises a mounting plate 196, which supports the handling element 166 and the shaft 176. The device 150 comprises a transfer mechanism 198, wherein the shaft 176 is coupled to this transfer mechanism 198 such that sliding the shaft 176 causes the shaft 176 to be rotated. The transfer mechanism 198 is a gear mechanism comprising fixed gear means 200, a first gear 202 and a second gear 204. The fixed gear means 200 is stationary fixed (at least indirectly) to the support structure 152 and is thus stationary with respect to the working surface 156. The fixed gear means 200 is a toothed rack. The first gear 202 is fixed on the shaft 176, rotating together with the shaft 176. The first gear 202 is in meshing engagement with the second gear 204. The axes of rotation 206 of the first and second gears 202, 204 are stationary with respect to each other. The second gear 204 is in meshing engagement with the fixed gear means 200, in particular in all positions of the sledge unit 164 and thus the shaft 176 between the start position 172 and the end position 174.

If the sledge unit 164 is slid in X-direction towards the end position 174, the second gear 204 is rotated due to the engagement with the fixed gear means 200. At the same time the first gear 202 is rotated in a first rotation direction 208 counterclockwise with respect to a second rotation direction 210 of the second gear 204, since the first gear 202 is in constant engagement with the second gear 204. Thus, the shaft 176 is rotated in a direction opposite to the sliding direction 170 towards the end position 174.

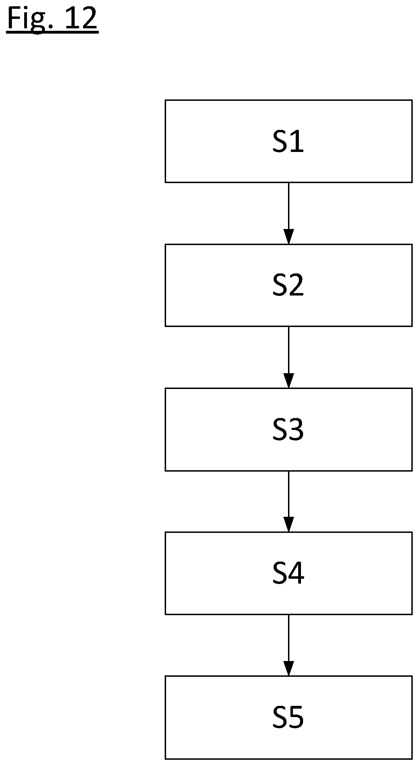

The manufacturing method is now described with respect to figures 6 to 12, wherein figure 12 shows a schematic flow chart.

In a first step S1, the shaft 176 is provided in the start position 172, as shown in figures 6 and 7. In figure 7, the film 184 is shown laying on the working surface 156.

In a next step S2, a fiber mat 148 is placed onto the film 184 along the working surface 156.

In a next step S3, a front end 212 of the fiber mat 148, the front end 212 facing the shaft 176, is pushed slightly under the shaft 176 against the film 184. Optionally, the film 184 is pushed slightly behind the shaft 176 against the film 184 such that the film 184 forms a pocket 214 (or loop).

In a next step S4, the sledge unit 164 and thus the shaft 176 are slid in the sliding direction 170 towards the end position 172 by manually using the handling element 166. Thereby, the fiber mat 148 is rolled up.

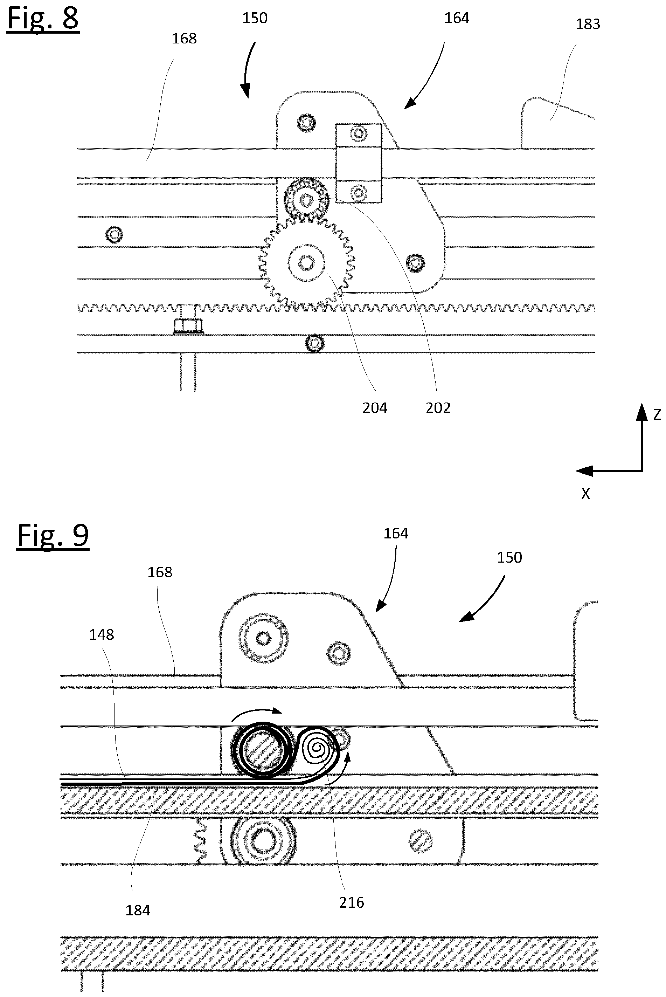

Figures 8 and 9 show the sledge unit 164 in an intermediate position between the start position 172 and the end position 174. Due to the rotation of the shaft 176, the film 184 is rolled up onto the shaft 176, however, the combination of movements, sliding in sliding direction 170 and rotation in the first rotation direction 208, the fiber mat 148 is rolled up in the pocket 214. In figure 9, the fiber mat 148 is already partially coiled and forms a coil 216.

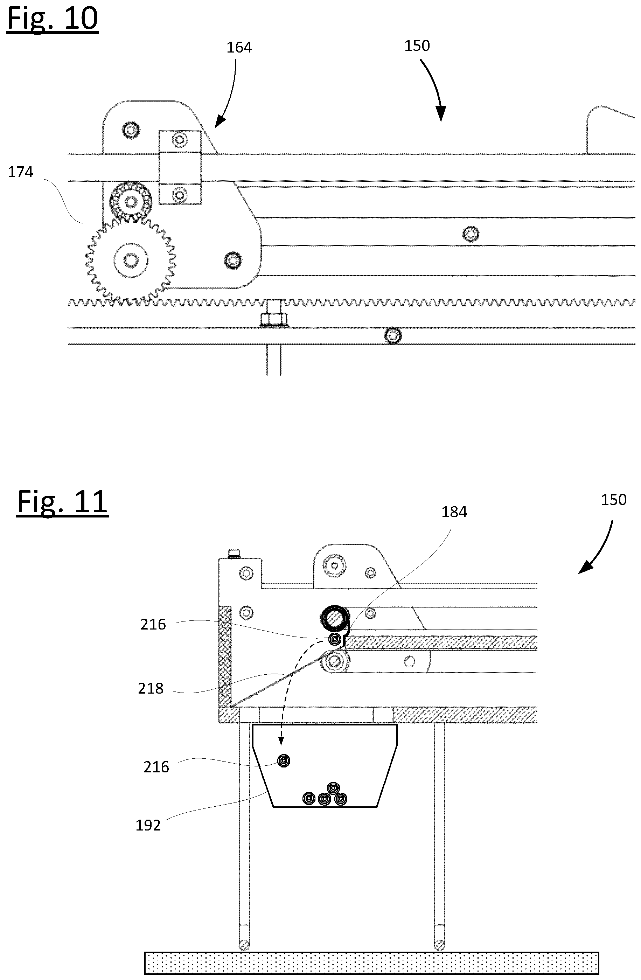

Figures 10 and 11 show the sledge unit 164 and thus the shaft 176 in the end position 174, wherein the fiber mat 148 is fully rolled up to form coil 216 and is in a final step 5 automatically released into the collector bucket 192. As can be seen, optionally an opening 218 (see also figure 5) is provided in the collector bucket 192, in order that the finished coil 216 can fall down from the device 150, e.g. into a separate box to gather several coils.

In an optional step, after the step S2 of laying the fiber mat 148 onto the film 184, glue 191 is provided at least partially onto the surface of the fiber mat 148 (see fig. 7).

Optionally, prior to the step S3 of pushing the fiber mat 148 under the shaft 176, the fiber mat 148 is folded at the front end 212 to form a folded section comprised of at least two layers of the fiber mat 148. Then, the fiber mat 148 is pushed with the folded section at least partially under the shaft 176. In one optional embodiment in this regard, the fiber mat 148 folded such that the folded section is facing away from the working surface 156. In other words, the front end 212 is not in direct contact with the working surface 156.

The described embodiment provides the mentioned effects and advantages.

We note that the overall design and structure of the device 150 can be different. For example, the support structure 152 and/or the stand 154, can be formed and constructed differently. Essentially, the device 150 must be designed to support the shaft 176 to be slidable and rotatable as described above, to provide a working surface 156 and to comprise the film 184 being connected to the shaft 176 with one end 186.

Although providing advantages, the second end 188 of the film 184 not necessarily needs to be fixed to the device 150 in any way, laying on the working surface 156 is sufficient.

The film 184 can be made of any suitable material, e.g. plastic, which allows that a fiber mat 148 can be placed onto it and which has a sufficiently low friction with the fiber mat 148, in order that it can be rolled up in the pocket 214 as described above. For example, the film 184 is a vacuum foil. Also, the film 184 can have different shapes.

Further, in also no or other abutment elements can be used for the sledge unit 164 to be limited between the start position 172 and the end position 174.

### Reference signs

- 100: wind turbine
- 102: tower
- 104: foundation
- 106: nacelle
- 108: rotor
- 110: rotor blade
- 112: rotor hub
- 114: rotor blade root area
- 116: transition area
- 118: profile area
- 120: longitudinal extension direction
- 122: pressure side
- 124: suction side
- 126: rotor blade connection end
- 128: flange connection
- 130: division area
- 132: first rotor blade segment
- 134: second rotor blade segment
- 136: first connection end
- 138: second connection end
- 140: segment
- 142: inserts
- 144: borehole
- 146: spacer
- 148: fiber mat
- 150: device
- 151: floor
- 152: support structure
- 153: fairing
- 154: stand
- 156: working surface
- 158: plate
- 160: lateral side
- 162: side wall
- 164: sledge unit
- 166: handling element
- 168: sledge bar
- 170: sliding direction
- 172: start position
- 174: end position
- 176: shaft
- 178: guide element
- 180: longitudinal axis of the handling element
- 182: longitudinal axis of the shaft
- 183: abutment element
- 184: film
- 185: abutment element
- 186: first end
- 188: second end
- 190: end of the working surface
- 191: glue
- 192: collector bucket
- 194: inclined surface
- 196: mounting plate
- 198: transfer mechanism
- 200: fixed gear means
- 202: first gear
- 204: second gear
- 206: Axes of rotation
- 208: first rotation direction
- 210: second rotation direction
- 212: front end
- 214: pocket
- 216: coil
- 218: opening

## Claims

1. Device (150) for rolling a fiber mat (148) to a coil (216) for a wind turbine rotor blade (110), the device (150) comprising
- a working surface (156),
- a shaft (176) being slidably and rotatably supported,
wherein
- the shaft (176) is slidable in a sliding direction (170) between a start position (172) and an end position (174) along the working surface (156), and
- the shaft (176) is rotatable in the opposite direction to the sliding direction (170), wherein with respect to the working surface (156) the shaft (176) rotates as if the shaft (176) were rolling backwards against the sliding direction (170), and
- a film (184) covering the working surface (156) and being fixedly connected to the shaft (176) with a first end (186), such that upon rotation of the shaft (176) the film (184) is wound up on the shaft (176).

2. Device (150) according to claim 1, comprising a transfer mechanism (198), wherein the shaft (176) is coupled to the transfer mechanism (198) such that by sliding the shaft (176) in the sliding direction (170) the shaft (176) is forced to rotate.

3. Device (150) according to claim 2, wherein the transfer mechanism (198) is a gear mechanism, the gear mechanism comprising fixed gear means (200) being stationary with respect to the working surface (156), wherein a first gear (202) is rotatably fixed on the shaft (176), the first gear (202) being in meshing engagement with a second gear (204), wherein the axes of rotation (206) of the first and second gears (202, 204) are fixed with respect to each other, and wherein the second gear (204) is in meshing engagement with the fixed gear means (200).

4. Device (150) according to anyone of the proceeding claims, comprising a sledge unit (164), the sledge unit (164) being slidable in the sliding direction (170).

5. Device (150) according to claims 3 and 4, wherein the first and the second gear (204) are coupled to the sledge unit (164).

6. Device (150) according to claims 4 or 5, wherein the shaft (176) is coupled to the sledge unit (164).

7. Device (150) according to claim 4 to 6, wherein the sledge unit (164) comprises a handling element (166) in order to move the shaft (176) between the start position (172) and the end position (174).

8. Device (150) according to anyone of the preceding claims, wherein a second end (188) of the film (184), the second end (188) being opposite to the first end (186), is fixedly connected to an end (190) of the working surface (156).

9. Device (150) according to anyone of the preceding claims, comprising one or more abutment elements (183, 185) in order to limit the movement of the shaft (176) respectivly the sledge unit (164) between the start position (172) and the end position (174).

10. Device (150) according to anyone of the preceding claims, comprising a guide element (178) on both sides of the working surface (156), in order to slidably support the shaft (176).

11. Device (150) according to anyone of the preceding claims, comprising a collector bucket (192), which is arranged adjacently to the working surface (156) in the area of the end position (174).

12. Method for rolling a fiber mat (148) to a coil (216) with a device (150) according to any of the preceding claims, the method comprising the following steps:
- providing the shaft (176) in the start position (172),
- laying the fiber mat (148) onto the film (184) along the working surface (156),
- pushing a front end (212) of the fiber mat (148), the front end (212) facing the shaft (176), under the shaft (176) against the film (184),
- sliding the shaft (176) in the sliding direction (170) into the end position (174) causing the shaft (176) to rotate such that the fiber mat (148) is being rolled up to a coil (216).

13. Method according to claim 11, wherein - in the step of pushing - the front end (212) of the fiber mat (148) is pushed under the shaft (176) and behind the shaft (176) against the film (184) such that the film (184) forms a pocket (214) behind the shaft (176).

14. Method according to claim 12 or 13, wherein - after the step of laying - glue is provided at least partially onto the surface of the fiber mat (148).

15. Method according to anyone of claims 12 to 14, wherein - prior to the step of pushing - the fiber mat (148) is folded at the front end (212) to form a folded section, and wherein the fiber mat (148) is pushed with the folded section at least partially under the shaft (176).

16. Method according to claim 15, wherein the fiber mat (148) is folded such that the folded section is facing away from the working surface (156).

## Patentansprüche

1. Vorrichtung (150) zum Aufrollen einer Fasermatte (148) zu einer Rolle (216) für ein Windenergieanlagenrotorblatt (110), die Vorrichtung (150) aufweisend
- eine Arbeitsfläche (156),
- eine Welle (176), die verschiebbar und drehbar gelagert ist, wobei
- die Welle (176) in einer Verschieberichtung (170) zwischen einer Startposition (172) und einer Endposition (174) entlang der Arbeitsfläche (156) verschiebbar ist, und
- die Welle (176) in der zur Verschieberichtung (170) entgegengesetzten Richtung drehbar ist, wobei sich in Bezug auf die Arbeitsfläche (156) die Welle (176) dreht, als ob die Welle (176) entgegen der Verschieberichtung (170) rückwärts rollen würde, und
- eine die Arbeitsfläche (156) bedeckende Folie (184), die mit einem ersten Ende (186) fest mit der Welle (176) verbunden ist, so dass bei Drehung der Welle (176) die Folie (184) auf der Welle (176) aufgewickelt wird.

2. Vorrichtung (150) nach Anspruch 1, einen
Transfermechanismus (198) aufweisend, wobei die Welle (176) so mit dem Transfermechanismus (198) gekoppelt ist, dass bei Verschiebung der Welle (176) in der Verschieberichtung (170) die Welle (176) gezwungen ist, sich zu drehen.

3. Vorrichtung (150) nach Anspruch 2, wobei der Transfermechanismus (198) ein Zahnradmechanismus ist, der Zahnradmechanismus ein feststehendes Zahnradmittel (200) aufweist, das in Bezug auf die Arbeitsfläche (156) stationär ist, wobei ein erstes Zahnrad (202) drehbar an der Welle (176) befestigt ist, das erste Zahnrad (202) in kämmendem Eingriff mit einem zweiten Zahnrad (204) ist, wobei die Drehachsen (206) des ersten und zweiten Zahnrads (202, 204) in Bezug aufeinander feststehend sind, und wobei das zweite Zahnrad (204) in kämmendem Eingriff mit dem feststehenden Zahnradmittel (200) ist.

4. Vorrichtung (150) nach einem der vorhergehenden Ansprüche, eine Schlitteneinheit (164) aufweisend, wobei die Schlitteneinheit (164) in der Verschieberichtung (170) verschiebbar ist.

5. Vorrichtung (150) nach den Ansprüchen 3 und 4, wobei das erste und zweite Zahnrad (204) mit der Schlitteneinheit (164) gekoppelt sind.

6. Vorrichtung (150) nach Anspruch 4 oder 5, wobei die Welle (176) mit der Schlitteneinheit (164) gekoppelt ist.

7. Vorrichtung (150) nach Anspruch 4 bis 6, wobei die Schlitteneinheit (164) ein Handhabungselement (166) aufweist, um die Welle (176) zwischen der Startposition (172) und der Endposition (174) zu bewegen.

8. Vorrichtung (150) nach einem der vorhergehenden Ansprüche, wobei ein zweites Ende (188) der Folie (184), wobei das zweite Ende (188) entgegengesetzt zum ersten Ende (186) ist, fest mit einem Ende (190) der Arbeitsfläche (156) verbunden ist.

9. Vorrichtung (150) nach einem der vorhergehenden Ansprüche, ein oder mehrere Anlageelemente (183, 185) aufweisend, um die Bewegung der Welle (176) respektive der Schlitteneinheit (164) zwischen der Startposition (172) und der Endposition (174) zu begrenzen.

10. Vorrichtung (150) nach einem der vorhergehenden Ansprüche, die ein Führungselement (178) auf beiden Seiten der Arbeitsfläche (156) aufweist, um die Welle (176) verschiebbar zu lagern.

11. Vorrichtung (150) nach einem der vorhergehenden Ansprüche, einen Sammelbehälter (192) aufweisend, der im Bereich der Endposition (174) angrenzend an die Arbeitsfläche (156) angeordnet ist.

12. Verfahren zum Aufrollen einer Fasermatte (148) zu einer Rolle (216) mit einer Vorrichtung (150) nach einem der vorhergehenden Ansprüche, wobei das Verfahren die folgenden Schritte umfasst:
- Bereitstellen der Welle (176) in der Startposition (172),
- Auflegen der Fasermatte (148) auf die Folie (184) entlang der Arbeitsfläche (156),
- Schieben eines vorderen Endes (212) der Fasermatte (148), wobei das vordere Ende (212) der Welle (176) zugewandt ist, unter die Welle (176) entgegen der Folie (184),
- Verschieben der Welle (176) in der Verschieberichtung (170) in die Endposition (174), was bewirkt, dass die Welle (176) sich dreht, so dass die Fasermatte (148) zu einem Coil (216) aufgewickelt wird.

13. Verfahren nach Anspruch 11, wobei - bei dem Schritt des Schiebens - das vordere Ende (212) der Fasermatte (148) unter die Welle (176) und hinter die Welle (176) entgegen der Folie (184) geschoben wird, so dass die Folie (184) eine Tasche (214) hinter der Welle (176) bildet.

14. Verfahren nach Anspruch 12 oder 13, wobei - nach dem Schritt des Auflegens - die Oberfläche der Fasermatte (148) zumindest teilweise mit Klebstoff versehen wird.

15. Verfahren nach einem der Ansprüche 12 bis 14, wobei - vor dem Schritt des Schiebens - die Fasermatte (148) am vorderen Ende (212) gefaltet wird, um einen gefalteten Abschnitt zu bilden, und wobei die Fasermatte (148) mit dem gefalteten Abschnitt zumindest teilweise unter die Welle (176) geschoben wird.

16. Verfahren nach Anspruch 15, wobei die Fasermatte (148) so gefaltet wird, dass der gefaltete Abschnitt von der Arbeitsfläche (156) abgewandt ist.

## Revendications

1. Dispositif (150) pour enrouler un tapis de fibres (148) en une bobine (216) pour une pale de rotor d'éolienne (110), le dispositif (150) comprenant
- une surface de travail (156),
- un arbre (176) qui est supporté de manière coulissante et rotative, sachant que
- l'arbre (176) peut être déplacé dans une direction de déplacement (170) entre une position de départ (172) et une position finale (174) le long de la surface de travail (156), et
- l'arbre (176) peut tourner dans la direction opposée à la direction de déplacement (170), sachant que, par rapport à la surface de travail (156), l'arbre (176) tourne comme si l'arbre (176) roulait en arrière dans la direction opposée à la direction de déplacement (170), et
- une feuille (184) recouvrant la surface de travail (156) et étant connectée de manière fixe à l'arbre (176) par une première extrémité (186), de sorte que lorsque l'arbre (176) tourne, la feuille (184) soit enroulée sur l'arbre (176).

2. Le dispositif (150) selon la revendication 1, comprenant un mécanisme de transfert (198), l'arbre (176) étant couplé au mécanisme de transfert (198) de sorte que, lorsque l'arbre (176) se déplace dans la direction de déplacement (170), l'arbre (176) soit forcé de tourner.

3. Le dispositif (150) selon la revendication 2, sachant que le mécanisme de transfert (198) est un mécanisme à engrenages, le mécanisme à engrenages comprenant un moyen d'engrenage fixe (200) qui est stationnaire par rapport à la surface de travail (156), une première roue dentée (202) étant fixée de manière rotative à l'arbre (176), la première roue dentée (202) est en prise avec une deuxième roue dentée (204), les axes de rotation (206) des première et deuxième roues dentées (202, 204) étant fixes l'un par rapport à l'autre, et la deuxième roue dentée (204) étant en prise avec le moyen d'engrenage fixe (200).

4. Le dispositif (150) selon l'une quelconque des revendications précédentes, comprenant une unité de chariot (164), l'unité de chariot (164) pouvant être déplacée dans la direction de déplacement (170).

5. Le dispositif (150) selon les revendications 3 et 4, sachant que les première et deuxième roues dentées (204) sont couplées à l'unité de chariot (164).

6. Le dispositif (150) selon la revendication 4 ou 5, sachant que l'arbre (176) est couplé à l'unité de chariot (164).

7. Le dispositif (150) selon les revendications 4 à 6, sachant que l'unité de chariot (164) comprend un élément de manipulation (166) pour déplacer l'arbre (176) entre la position de départ (172) et la position finale (174).

8. Le dispositif (150) selon l'une quelconque des revendications précédentes, sachant qu'une deuxième extrémité (188) de la feuille (184), la deuxième extrémité (188) étant opposée à la première extrémité (186), est connectée de manière fixe à une extrémité (190) de la surface de travail (156).

9. Le dispositif (150) selon l'une quelconque des revendications précédentes, comprenant un ou plusieurs éléments d'appui (183, 185) pour limiter le mouvement de l'arbre (176), respectivement de l'unité de chariot (164), entre la position de départ (172) et la position finale (174).

10. Le dispositif (150) selon l'une quelconque des revendications précédentes, comprenant un élément de guidage (178) de part et d'autre de la surface de travail (156), pour supporter l'arbre (176) de manière coulissante.

11. Le dispositif (150) selon l'une des revendications précédentes, comprenant un collecteur (192) disposé adjacente à la surface de travail (156) au niveau de la position finale (174).

12. Procédé de roulage d'un tapis de fibres (148) en une bobine (216) au moyen d'un dispositif (150) selon l'une quelconque des revendications précédentes, ledit procédé comprenant les étapes suivantes :
- la fourniture de l'arbre (176) dans la position de départ (172),
- la mise en place du tapis de fibres (148) sur la feuille (184) le long de la surface de travail (156),
- pousser une extrémité avant (212) du tapis de fibres (148) sous l'arbre (176) contre la feuille (184), l'extrémité avant (212) faisant face à l'arbre (176),
- déplacer l'arbre (176) dans la direction de déplacement (170) vers la position finale (174), ce qui a pour effet de faire tourner l'arbre (176) de sorte que le tapis de fibres (148) soit enroulé en une bobine (216).

13. Le procédé selon la revendication 11, sachant que - lors de l'étape de poussée - l'extrémité avant (212) du tapis de fibres (148) est poussée sous l'arbre (176) et derrière l'arbre (176) contre la feuille (184), de sorte que la feuille (184) forme une poche (214) derrière l'arbre (176).

14. Le procédé selon la revendication 12 ou 13, sachant que - après l'étape de mise en place - on applique au moins partiellement de la colle sur la surface du tapis de fibres (148).

15. Le procédé selon l'une quelconque des revendications 12 à 14, sachant que - avant l'étape de poussée - le tapis de fibres (148) est plié à son extrémité avant (212) pour former une portion pliée, et sachant que le tapis de fibres (148) est poussé avec la portion pliée au moins partiellement sous l'arbre (176).

16. Le procédé selon la revendication 15, sachant que le tapis de fibres (148) est plié de manière à ce que la partie pliée soit tournée à l'opposée de la surface de travail (156).
